(19) Europäisches Patentamt
European Patent Office
Office européen des brevets

(11) Veröffentlichungsnummer: **0 113 860**
**B2**

(12) **NEUE EUROPÄISCHE PATENTSCHRIFT**

(45) Veröffentlichungstag der neuen Patentschrift: **10.10.90**

(51) Int. Cl.[5]: **C 09 B 41/00**

(21) Anmeldenummer: **83112381.5**

(22) Anmeldetag: **09.12.83**

# (54) Verfahren zur Herstellung von Azofarbstoffen.

(30) Priorität: **22.12.82 DE 3247352**

(43) Veröffentlichungstag der Anmeldung: **25.07.84 Patentblatt 84/30**

(45) Bekanntmachung des Hinweises auf die Patenterteilung: **09.04.86 Patenblatt 86/15**

(45) Bekanntmachung des Hinweises auf die Entscheidung über den Einspruch: **10.10.90 Patentblatt 90/41**

(84) Benannte Vertragsstaaten: **CH DE FR GB LI**

(56) Entgegenhaltungen:
EP-A-0 043 927
DE-A-1 644 319
DE-A-1 950 097
DE-A-2 343 588
DE-A-2 914 002
US-A-2 812 321
US-A-3 986 827

(73) Patentinhaber: **BAYER AG**
**D-5090 Leverkusen 1 Bayerwerk (DE)**

(72) Erfinder: **Scholl, Walter, Dr.**
**Bilharzstrasse 22**
**D-5000 Köln 80 (DE)**

(56) Entgegenhaltungen:
CHEMICAL ABSTRACTS, Band 95, Nr. 16, 1981, Seite 77, Nr. 134377y, Columbus, Ohio, US
Houben-Weyl, Bd.X/3, S. 291 (1965)

**Die Akte enthält technische Angaben, die nach dem Eingang der Anmeldung eingereicht wurden und die nicht in dieser Patentschrift enthalten sind.**

EP 0 113 860 B2

Courier Press, Leamington Spa, England.

**Beschreibung**

Gegenstand der vorliegenden Erfindung ist ein Verfahren zur Herstellung von Azofarbstoffen durch Kupplung von Diazoniumverbindungen vom Typ o-Aminophenol oder o-Aminonaphthol auf o-kuppelnde Phenole oder Naphthole, gegebenenfalls anschließende Metallisierung und Isolierung durch Aussalzen oder Sprühtrocknung, welches dadurch gekennzeichnet ist, daß man die Kupplung in Gegenwart von basischen, anorganischen Lithiumverbindungen und Polyglykolen durchführt.

Geeignete Lithiumverbindungen sind beispielsweise $LiOH \cdot H_2O$ oder basische Li-Salze wie $Li_2CO_3$ oder sekundäre oder tertiäre Li-Phosphate.

Geeignete Polyglykole sind beispielsweise Polyethylenglykole, Polypropylenglykole oder gemischte Kondensationsprodukte aus Ethylenoxid und Propylenoxid, insbesondere solche mit Molekulargewicht von etwa 200 bis 600.

Besonders geeignet sind Polyglykole der Formel

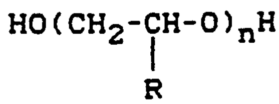

mit n = 2 bis 20, R = H, $CH_3$, insbesondere solche mit n = 5 bis 10.

Die Polyglykole werden in Mengen von etwa 1 bis 50 Gew.-%, bezogen auf Azofarbstoff, eingesetzt. Gegebenenfalls können geringe Mengen üblicher wassermischbarer Lösungsmittel zugesetzt werden.

Im allgemeinen wird das Verfahren folgendermaßen durchgeführt:

Die Kupplungskomponente wird in Wasser und Polyglykol mit vorzugsweise mindestens stöchiometrischen Mengen der Li-Verbindung verrührt. Dann läßt man — im üblichen Temperaturbereich — die Lösung der Suspension des Diazoniumsalzes zulaufen, wobei der pH durch laufende Zugabe von $LiOH \cdot H_2O$ auf 7 bis 14, vorzugsweise 10 bis 12, gehalten wird.

Das Verfahren eignet sich prinzipiell zur Herstellung sulfogruppenhaltiger und sulfogruppenfreier Azofarbstoffe, insbesondere solchen vom Typ o-Aminophenol bzw. o-Aminonaphthol → o-kuppelndes Phenol bzw. Naphthol.

Ganz besonders geeignet ist das Verfahren zur Herstellung von Farbstoffen des Typs

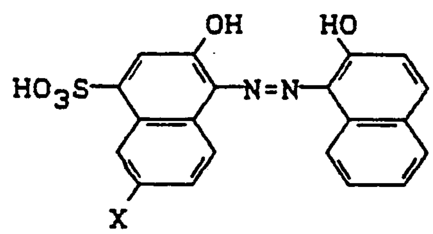

mit X = H, $NO_2$

Die erhaltenen Farbstoffe können direkt isoliert und danach weiter umgesetzt werden, z.B. metallisiert. Vorteilhafterweise wird ohne vorherige Isolierung metallisiert, vorzugsweise bei Temperaturen von etwa 70 bis 110°C und anschließend durch Aussalzen oder Sprühtrocknen isoliert.

Das erfindungsgemäße Verfahren liefert bei kurzen Reaktionszeiten höhere Ausbeuten als bekannte wäßrige Verfahren und erleichtert die Metallisierung der erhaltenen Farbstoffe. Andererseits erleichtert es gegenüber den Lösungsmittelverfahren die Aufarbeitung der Farbstoffe, beispielsweise die Sprühtrocknung, insbesondere die metallisierter Farbstoffe.

In der DE—A 19 50 097 wird ein Verfahren zur Herstellung von Azofarbstoffen in Form wäßriger Pasten durch Kupplung von diazotierten Aminen in neutralem bis alkalischem wäßrigen Medium in Gegenwart basischer Lithium-Verbindungen beschrieben. Polyglykole werden dabei nicht mit eingesetzt.

In der US—A 2 812 321 wird die Diazotierung von 1-Amino-2-naphthol-4-sulfosäure in Gegenwart von oberflächenaktiven Verbindungen vom Typ Polyethylenoxid-Fettsäureester beschrieben.

Schließlich ist aus der DE—A 1 644 319 ein Verfahren zur Herstellung von Kupplungsprodukten aus diazotierten Aminen und Kupplungskomponenten in Gegenwart von Glykoläthern und cyclischen Ethern bekannt, wobei jedoch die pH-Einstellung mit basischen Natriumverbindungen erfolgt.

## Beispiel 1

1 Mol 6-Nitro-2-naphthochinon-1-diazid-4-sulfonsäure wird als 57,2%ige Paste in 690 ml Wasser eingetragen und gut verrührt. Dann gibt man 460 g Eis hinzu und stellt mit ca. 80 g $LiOH \cdot H_2O$, die man langsam einträgt, bei 10°C auf pH 4.

1 Mol β-Naphthol wird in 138 ml Polyglykol P 400 (Octaethylenglykol-Homologengemisch) und 550 ml Wasser verrührt. Man trägt 27,6 g $LiOH \cdot H_2O$ ein und verrührt eine Stunde. Das β-Naphthol geht fast

vollständig in Lösung. pH ca. 12. Dann läßt man die Lösung der 6-Nitro-2-naphthochinon-1-diazid-4-sulfonsäure im Verlaufe von 90 Minuten zulaufen. Die Temperatur wird bei 20—25°C gehalten. Gegebenenfalls gibt man etwas Eis hinzu. Der pH fällt zunächst unter 10. Durch langsames Eintragen von insgesamt ca. 16 g $LiOH \cdot H_2O$ wird der pH auf 9,5—10 gestellt und gehalten. Nach ca. 2 Stunden ist keine Diazoverbindung mehr nachweisbar. Zur Isolierung des Farbstoffs wird die Farbstoffsuspension mit ca. 115 ml Salzsäure 30%ig auf pH 3,5 gestellt und auf 80°C erwärmt. Dann trägt man 80 g NaCl ein und saugt ab. Die Farbstoffpaste wird bei 80—90°C i.V. getrocknet.

Beispiel 2

Zur Herstellung des 1:2-Cr-Komplexfarbstoffes versetzt man die Farbstoffsuspension aus Beispiel 1 mit 11,5 g Salicylsäure, erwärmt auf 40°C, läßt 252 g einer wäßrigen Chromacetatlösung mit einem $Cr_2O_3$-Gehalt von 16,62% zulaufen und rührt 1 Stunde bei 98—100°C. Nach beendeter Chromierung wird die Lösung anschließend sprühgetrocknet.

Mit äquimolaren Mengen Chromierungsmittel und entsprechend niedrigem pH läßt sich mit der Farbstoffsuspension aus Beispiel 1 leicht der 1:1-Chromkomplexfarbstoff herstellen.

In Analogie zu Beispiel 1 und 2 lassen sich in sehr guter Ausbeute die folgenden. Farbstoffe bzw. deren Chrom- oder Kobaltkomplexe herstellen:

3) 2-Naphthochinon-1-diazid-4-sulfonsäure → β-Naphthol.

4) 4,6-Dichlor-2-aminophenol → 1-N-Carboethoxy-amino-7-hydroxynaphthalin-3-sulfonsäure.

5) 2-Naphthochinon-1-diazid-4-sulfonsäure → 4′-Hydroxy-naphtho-(2′, 1′-4,5)oxathiol-S-dioxyd (Naphthohydrochinon-methylen-sulfonether).

6) 5-Nitro-2-aminophenol → 1-Hydroxy-6-amino-naphthalin-3-sulfonsäure.

7) 2-Aminophenol-4-ethyl-sulfon → 1-Methylsulfonyl-amino-7-hydroxynaphthalin.

8) 5-Nitro-2-aminophenol → β-Naphthol.

**Patentansprüche**

1. Verfahren zur Herstellung von Azofarbstoffen durch Kupplung von Diazoniumverbindungen vom Typ o-Aminophenol oder o-Aminonaphthol auf o-kuppelnde Phenole oder Naphthole, gegebenenfalls anschließende Metallisierung und Isolierung durch Aussalzen oder Sprühtrocknung, dadurch gekennzeichnet, daß man die Kupplung in Gegenwart von basischen, anorganischen Lithiumverbindungen und Polyglykolen durchführt.

2. Verfahren nach Anspruch 1, dadurch gekennzeichnet, daß als Diazoniumkomponente 6-Nitro-2-naphthochinon-1-diazid-4-sulfonsäure und als Kupplungskomponente ß-Naphthol eingesetzt werden.

3. Verfahren nach Anspruch 1, dadurch gekennzeichnet, daß man $LiOH \cdot H_2O$ oder basische Li-Salze wie $Li_2CO_3$ oder sekundäre oder tertiäre Li-Phosphate verwendet.

4. Verfahren nach Anspruch 1, dadurch gekennzeichnet, daß man Polyethylenglykole, Polypropylenglykole oder gemischte Kondensationsprodukte aus Ethylenoxid und Propylenoxid, insbesondere solche der Formel

$$HO(CH_2-\underset{\displaystyle R}{\underset{|}{CH}}-O)_nH$$

mit n = 2 bis 20, R = H, $CH_3$, vorzugsweise solche mit n = 5 bis 10 verwendet.

**Revendications**

1. Procédé pour la fabrication de colorants azoïques par copulation de composés diazonium du type o-aminophénol ou o-aminonaphtol avec des phénols ou naphtols copulant en ortho, suivie éventuellement de métallisation et isolement par relargage ou séchage par pulvérisation, caractérisé en ce que l'on effectue la copulation en présence de composés inorganiques basiques de lithium et de polyglycols.

2. Procédé selon la revendication 1, caractérisé en ce que l'on utilise comme composants diazonium l'acide 6-nitro-2-naphtoquinone-1-diazide-4-sulfonique et comme composant de copulation le β-naphtol.

3. Procédé selon la revendication 1, caractérisé en ce que l'on utilise LiOH, $H_2O$ ou des sels basiques de Li comme $Li_2CO_3$ ou des phosphates secondaires ou tertiaires de Li.

4. Procédé selon la revendication 1, caractérisé en ce que l'on utilise des polyéthylèneglycols, des polypropylèneglycols ou des produits de condensation mixtes d'oxyde d'éthylène et d'oxyde de propylène, en particulier ceux de formule

$$HO(CH_2-\underset{\displaystyle R}{\underset{|}{CH}}-O)_nH$$

dans laquelle n = 2—20, de préférence 5—10, et R = H ou $CH_3$.

**Claims**

1. Process for the preparation of azo dyestuffs by coupling diazonium compounds of the o-aminophenol or o-aminonaphthol type onto o-coupling phenols or naphthols, and, if desired, subsequent metallization and isolation by salting out or spray-drying, characterized in that the coupling is carried out in the presence of basic inorganic lithium compounds and polyglycols.

2. Process according to Claim 1, characterized in that 6-nitro-2-naphthoquinone-1-diazide-4-sulphonic acid is used as diazonium component and β-naphthol as coupling component.

3. Process according to Claim 1, characterized in that $LiOH \cdot H_2O$ or basic Li salts such as $Li_2CO_3$ or secondary or tertiary Li phosphates are used.

4. Process according to Claim 1, characterized in that polyethylene glycols, polypropylene glycols or mixed condensation products of ethylene oxide and propylene oxide, in particular those of the formula

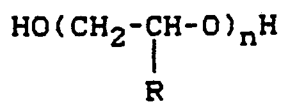

where n is 2 to 20, R is H, $CH_3$, preferably those where n is 5 to 10, are used.